(19) Europäisches Patentamt
European Patent Office
Office européen des brevets

(11) EP 1 133 529 B1

(12) EUROPÄISCHE PATENTSCHRIFT

(45) Veröffentlichungstag und Bekanntmachung des Hinweises auf die Patenterteilung:
**06.07.2005 Patentblatt 2005/27**

(21) Anmeldenummer: **99971826.5**

(22) Anmeldetag: **28.10.1999**

(51) Int Cl.[7]: **C08L 57/00**, C08L 55/02, C08L 67/02, C08L 69/00, C08F 279/02, C08F 6/22 // C08L69:00, C08L57:00, C08L67:02, C08L57:00, C08L55:02, C08L57:00

(86) Internationale Anmeldenummer:
**PCT/EP1999/008182**

(87) Internationale Veröffentlichungsnummer:
**WO 2000/027918 (18.05.2000 Gazette 2000/20)**

(54) **THERMOPLASTISCHE HARZE MIT NIEDRIGEM GROBKORN-ANTEIL**

THERMOPLASTIC RESINS WITH A LOW PROPORTION OF COARSE PARTICLES

MATIERES MOULABLES THERMOPLASTIQUES CONTENANT UNE FAIBLE PROPORTION DE PARTICULES GROSSIERES

(84) Benannte Vertragsstaaten:
**AT BE CH CY DE DK ES FI FR GB GR IE IT LI LU MC NL PT SE**

(30) Priorität: **10.11.1998 DE 19851676**

(43) Veröffentlichungstag der Anmeldung:
**19.09.2001 Patentblatt 2001/38**

(73) Patentinhaber: **Bayer Aktiengesellschaft**
**51368 Leverkusen (DE)**

(72) Erfinder:
- **ZOBEL, Michael**
  **50823 Köln (DE)**
- **WITTMANN, Dieter**
  **D-51375 Leverkusen (DE)**
- **EICHENAUER, Herbert**
  **D-41539 Dormagen (DE)**
- **EITEL, Alfred**
  **A-8222 St. Johann (AT)**
- **ECKEL, Thomas**
  **D-41540 Dormagen (DE)**
- **KELLER, Bernd**
  **D-47608 Geldern (DE)**
- **HAUERTMANN, Hans-Bernhard**
  **D-41539 Dormagen (DE)**
- **ROSE, Dorothy**
  **D-41539 Dormagen (DE)**

(56) Entgegenhaltungen:
**EP-A- 0 460 973**
**EP-A- 0 535 908**
**EP-A- 0 634 445**
**US-A- 3 509 238**
**US-A- 3 928 494**

- **LORENZ ET AL: "bestimmung der teilchengrößenverteilung wäßriger polymerdispersionen" KAUTSCHUK UND GUMMI - KUNSTSTOFFE., Bd. 42, Nr. 12, 1989, Seiten 1101-1106, XP002133882 DR. ALFRED HUTHIG VERLAG GMBH. HEIDELBERG., DE ISSN: 0948-3276**
- **ELISSEEVA, IVANCHEV, KUCHANOV, LEBEDEV: "emulsion polymerization" , CONSULTANTS BUREAU , NEW YORK US XP002133883 Seite 114 -Seite 122; Abbildung 3.15**
- **HAM: "vinyl polymerization ii" 1969 , MARCEL DEKKER , NEW YORK US XP002133884 Seite 103 -Seite 113; Tabelle 1.5**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft kautschukhaltige Vinylpolymerisate und thermoplastische Formmassen mit verbesserten mechanischen Eigenschaften sowie deren Verwendung.

Thermoplastische Formmassen insbesondere solche, die Homo- und/oder Copolymerisate von einem oder mehreren ethylenisch ungesättigten Monomeren, Polycarbonate sowie Polyester enthalten, sind aus einer Vielzahl Veröffentlichungen bekannt. Dies gilt insbesondere für den Einsatz von ABS-Polymerisaten. Nur beispielhaft sei auf folgende Dokumente hingewiesen: DE-A-196 16 968, WO 97/40 092, EP-A-728 811, EP-A-315 868 (= US-A-4.937.285), EP-A-0 174 493 (US-A-4 983 658), US-A-5 030 675, JA-59 202 240, EP-A-0 363 608 (= US-A-5 204 394), EP-A-0 767 204, EP-A-0 611 798, WO 96/27 600, EP-A-0 754 531.

Aus dem Stand der Technik ist bekannt, Polymerlatices zur Entfernung von Verunreinigungen oder Grobanteilen zu filtrieren. So wird beispielsweise in Houben Weyl XIV/1,Makromolekulare Stoffe 1, Seiten 348 bis 356 (Georg Thieme Verlag, Stuttgart, 1961) sowie in DE-A-4 126 483 und US-A-4 747 959 die Filtration von Kautschuklatices beschrieben. Zusammenhänge mit den mechanischen Eigenschaften sind aus diesem Stand der Technik nicht bekannt.

Aus der EP-A-0 704 488 sind thermoplastische Formmassen mit einem Teilchendurchmesser von 0,20 bis 0,35 µm bekannt. Ein Zusammenhang mit Reißdehnung, Thermostabilität, Rohton und Kerbschlagzähigkeit ist diesem Stand der Technik nicht zu entnehmen.

Aufgabe der vorliegenden Erfindung ist es demgemäß kautschukhaltige Vinylpolymerisate zur Verfügung zu stellen, die sich durch verbesserte mechanische Eigenschaften, insbesondere hinsichtlich der Reißdehnung, der Thermostabilität, des Rohtons und der Kerbschlagzähigkeit, sowie durch eine besonders gleichbleibende Produktqualität auszeichnen.

Diese Aufgabe wird durch kautschukhaltige Vinylpolymerisate von einem oder mehreren ethylenisch ungesättigten Monomeren ("Vinylmonomere") ausgewählt aus der Gruppe der einfach oder mehrfach ungesättigten Olefine, wie Ethylen, Propylen, Chloropren, Butadien-1,3, Isopropen, Vinylacetat, Styrol, α-Methylstyrol, kernsubstituierte Styrole, Vinylcyanide, wie Acrylnitril, Methacrylnitril, Maleinsäureanhydrid, N-substituierte-Maleinimide, $C_1$-$C_8$-Alkylacrylate und -Methacrylate, wie Methylacrylat und Methylmethacrylat, gelost, die ≤100 ppm Grobanteile mit mittleren Teilchendurchmessern von 200 bis 500 µm enthalten. Besonders bevorzugt sind Grobanteile in Mengen von ≤50 ppm, insbesondere ≤10 ppm.

Der Grobanteil mit mittleren Teilchendurchmessern von 100 bis 200 µm liegt vorzugsweise bei weniger als 1000 ppm. Besonders bevorzugt sind Grobanteile von ≤500 ppm, insbesondere von ≤100 ppm. Ganz besonders bevorzugt sind Anteile von ≤50 ppm.

Der Grobanteil liegt bei mittleren Teilchendurchmessern von 50 bis 100 µm, vorzugsweise bei ≤10.000 ppm. Besonders bevorzugt sind bei diesen mittleren Teilchendurchmessern Grobanteile von ≤5.000 ppm, insbesondere von ≤1000 ppm. Ganz besonders bevorzugt sind Grobanteile von ≤500 ppm.

Der mittlere Teilchendurchmesser der eingesetzten kautschukhaltigen Vinylpolymerisate liegt vorzugsweise bei 0,04 bis 1 µm, vorzugsweise bei 0,1 bis 0,6 µm.

Der mittlere Teilchendurchmesser $d_{50}$ (auch Teilchengröße genannt), ist der Durchmesser, oberhalb und unterhalb dessen jeweils 50 Gew.-% der Teilchen liegen. Er kann mittels Ultrazentrifugenmessung (W Scholtan, H. Lange, Kolloid, Z. und Z. Polymere 250 (1972), 782-796) bestimmt werden.

Erfindungsgemäß werden die oben genannten kautschukhaltigen Vinylpolymerisate von ethylenisch ungesättigten Monomeren eingesetzt. Auch Mischungen verschiedener kautschukhaltiger Vinylpolymerisate sind geeignet.

Insbesondere kommen in Frage:

- kautschukhaltige Vinylpolymerisate, z.B. Pfropfpolymerisate von Vinylmonomeren auf einen Kautschuk (A.2),
- Mischungen aus kautschukfreien (A.1) und kautschukhaltigen (A.2) Vinylpolymerisaten.

Bevorzugte Vinylpolymerisate A.1 sind Copolymerisate aus einerseits Styrol, α-Methylstyrol, kernsubstituiertem Styrol oder Mischungen (A.1.1) und andererseits Acrylnitril, Methacrylnitril, (Meth)Acrylsäure-$C_1$-$C_8$-Alkylester, Maleinsäureanhydrid, N-substituiertes Maleinimid oder Mischungen (A.1.2).

Die Copolymerisate können vorzugsweise 50 bis 98Gew.-% A.1.1 und 50 bis 2 Gew.-% A.1.2 enthalten.

Besonders bevorzugte Copolymerisate A.1 sind solche aus Styrol, Acrylnitril und gegebenenfalls Methylmethacrylat, aus α-Methylstyrol, Acrylnitril und gegebenenfalls Methylmethacrylat sowie aus Styrol, α-Methylstyrol, Acrylnitril und gegebenenfalls Methylmethacrylat.

Die bekanntesten sind Styrol-Acrylnitril-Copolymerisate, die durch radikalische Polymerisation, insbesondere durch Emulsions-, Suspensions-, Lösungs- oder Massepolymerisation hergestellt werden können. Die Copolymerisate A.1 besitzen vorzugsweise Molekulargewichte $\overline{M}_w$ (Gewichtsmittel, ermittelt durch Lichtstreuung oder Sedimentation)

von 15.000 bis 200.000.

Weitere besonders bevorzugte Copolymerisate A.1 sind statistisch aufgebaute Copolymerisate aus Styrol und Maleinsäureanhydrid, die z.B. durch eine kontinuierliche Masse- oder Lösungspolymerisation bei unvollständigen Umsätzen aus den entsprechenden Monomeren hergestellt werden können. Ihre Zusammensetzung kann innerhalb weiter Grenzen variiert werden. Bevorzugt enthalten sie 5 bis 25 Gew.-% Maleinsäureanhydrideinheiten.

Anstelle von Styrol können diese Polymerisate auch kernsubstituierte Styrole, wie p-Methylstyrol, Vinyltoluol, 2,4-Dimethylstyrol und andere substituierte Styrole, wie α-Methylstyrol, enthalten.

Die kautschukhaltigen Vinylpolymerisate A.2 umfassen z.B. Pfropf(co)polymerisate mit kautschukelastischen Eigenschaften, die im wesentlichen aus mindestens zwei der folgenden Monomeren erhältlich sind: Chloropren, Butadien-1,3, Isopropen, Styrol, α-Methylstyrol, Acrylnitril, Ethylen, Propylen, Vinylacetat, $C_1$-$C_8$-Alkylacrylate und -methacrylate. Solche Polymerisate sind z.B. in "Methoden der Organischen Chemie" (Houben-Weyl), Bd. 14/1, Georg Thieme-Verlag, Stuttgart, 1961, S. 393-406 und in C.B. Bucknall, "Toughened Plastics", Appl. Science Publishers, London 1977, beschrieben. Im allgemeinen sind die Polymerisate A.2 partiell vernetzt und besitzen im allgemeinen Gelgehalte von über 20 Gew.-%, vorzugsweise über 40 Gew.-%.

Bevorzugte kautschukartige Vinylpolymerisate A.2 sind Pfropfpolymerisate aus:

A.2.1 5 bis 95, vorzugsweise 30 bis 80, Gew.-Teilen, einer Mischung aus

A.2.1.1 50 bis 95 Gew.-Teilen Styrol, α-Methylstyrol, halogen- oder methylkernsubstituierten Styrolen, (Meth)Acrylsäure-$C_1$-$C_8$-Alkylester oder Mischungen dieser Verbindungen und

A.2.1.2 5 bis 50 Gew.-Teilen Acrylnitril, Methacrylnitril, (Meth)Acrylsäure-$C_1$-$C_8$-Alkylester, Maleinsäuranhydrid, $C_1$-$C_4$-alkyl- bzw. phenyl-N-substituierten Maleinimiden oder Mischungen dieser Verbindungen auf

A.2.2 5 bis 95, vorzugsweise 20 bis 70 Gew.-Teile Kautschuk-Polymerisat mit einer Glasübergangstemperatur unter -10°C.

Bevorzugte Pfropfpolymerisate A.2 sind z.B. mit Styrol und/oder Acrylnitril und/oder Alkylacrylaten oder -Methacrylaten gepfropfte Polybutadiene, Butadien/Styrol-Copolymerisate und Acrylatkautschuke; d.h. Copolymerisate der in der DE-OS 1 694 173 (= US-A-3 564 077) beschriebenen Art; mit Acryl- oder Methacrylsäurealkylestem, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzugte Polymerisate A.2 sind ABS-Polymerisate, wie sie z.B. in der DE-OS 2 035 390 (= US-A-3 644 574) und in der DE-OS 2 248 242 (= GB-PS 1 409 275) beschrieben sind.

Erfindungsgemäß besonders bevorzugt sind Pfropfkautschuke mit Kautschukgehalten von mindestens 50 Gew.%, vorzugsweise mindestens 55 Gew.-%.

Besonders bevorzugte Pfropfpolymerisate A.2 sind erhältlich durch Pfropfpolymerisation von

α. 10 bis 70, vorzugsweise 15 bis 50, insbesondere 20 bis 40 Gew.-%, bezogen auf Pfropfpolymerisat A.2, von Acrylsäureestern oder Methacrylsäureestern oder von 10 bis 70, vorzugsweise 15 bis 50, insbesondere 20 bis 40 Gew.-% eines Gemisches aus 10 bis 50, vorzugsweise 20 bis 35 Gew.-%; bezogen auf Gemisch, Acrylnitril, Acrylsäureester oder Methacrylsäureester und 50 bis 90, vorzugsweise 65 bis 80 Gew.-%, bezogen auf Gemisch, Styrol oder kernsubstituierte Styrole oder eine Mischung daraus (als Pfropfauflage A.2.1) auf

β. 30 bis 90, vorzugsweise 50 bis 85, insbesondere 60 bis 80 Gew.-%, bezogen auf Pfropfpolymerisat A.2, eines Butadien-Polymerisats mit mindestens 50 Gew.-%, bezogen auf β, Butadienresten (als Pfropfgrundlage A.2.2).

Im allgemeinen beträgt der Gelanteil der Pfropfgrundlage β mindestens 20 Gew.-% (in Toluol gemessen), der Pfropfgrad G 0,15 bis 0,55.

Acrylsäureester bzw. Methacrylsäureester α sind Ester der Acrylsäure oder Methacrylsäure und einwertiger Alkohole mit 1 bis 8 C-Atomen. Besonders bevorzugt sind Methylmethacrylat, Ethylmethacrylat, Propylmethacrylat, n-Butylacrylat, t-Butylacrylat und t-Butylmethacrylat.

Das Butadienpolymerisat β kann neben Butadienresten bis zu 50 Gew.-%, bezogen auf β, Reste anderer ethylenisch ungesättigter Monomerer, wie Styrol, Acrylnitril, $C_1$-$C_4$-Alkylester der Acryl- oder Methyacrylsäure (wie Methylacrylat, Ethylacrylat, Methylmethacrylat, Ethylmethacrylat), Vinylester und/oder Vinylether) enthalten. Bevorzugt ist Polybutadien.

Bei der Pfropfpolymerisation werden die Pfropfmonomeren bekanntlich nicht vollständig auf die Pfropfgrundlage polymerisiert; erfindungsgemäß schließen Pfropfpolymerisate A.2 aber Produkte ein, die durch Polymerisation der Pfropfmonomere in Gegenwart der Pfropfgrundlage gewonnen werden.

Weitere besonders bevorzugte Polymerisate A.2 sind Pfropfpolymerisate aus

τ. 20 bis 90 Gew.-%, bezogen auf A.2, Acrylatkautschuk mit einer Glasübergangstemperatur unter -20°C als Pfropfgrundlage A.2.2 und

δ. 10 bis 80 Gew.-%, bezogen auf A.2, mindestens eines polymerisierbaren, ethylenisch ungesättigten Monomeren, als Pfropfmonomere A.2.1

Die Acrylatkautschuke der Polymerisate A.2 sind vorzugsweise Polymerisate aus Acrylsäurealkylestern, gegebenenfalls mit bis zu 40 Gew.-%, bezogen auf τ, anderen polymerisierbaren, ethylenisch ungesättigten Monomeren. Zu den bevorzugten polymerisierbaren Acrylsäureestern gehören $C_1$-$C_{12}$-Alkylester, vorzugsweise $C_1$-$C_8$-Alkylester, beispielsweise Methyl-, Ethyl-, Butyl-, n-Octyl- und 2-Ethyl-hexylester; Halogenalkylester, vorzugsweise Halogen-$C_1$-$C_8$-Alkyl-ester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykol-dimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf die Pfropfgrundlage τ.

Bei cyclischen vernetzenden Monomeren mit mindestens 3 ethylenisch ungesättigten Gruppen ist es vorteilhaft, die Menge auf unter 1 Gew.-% der Pfropfgrundlage τ zu beschränken.

Bevorzugte "andere" polymerisierbare, ethylenisch ungesättigte Monomere, die neben den Acrylsäureestern gegebenenfalls zur Herstellung der Pfropfgrundlage dienen können, sind z.B. Acrylnitril, Styrol, α-Methylstyrol, Acrylamide, Vinyl-$C_1$-$C_6$-Alkylether, Methylmethacrylat, Butadien. Bevorzugte Acrylatkautschuke als Pfropfgrundlage τ sind Emulsionspolymerisate, die einen Gelgehalt von mindestens 60 Gew.-% aufweisen.

Weitere geeignete Pfropfgrundlagen gemäß A.2.2 sind Silikonkautschuke mit pfropfaktiven Stellen, wie sie in DE-OS 37 04 657, DE-OS 37 04 655, DE-OS 36 31 540 und DE-OS 36 31 539 beschrieben werden.

Der Gelgehalt der Pfropfgrundlage A.2.2 wird bei 25°C in Dimethylformamid bestimmt (M. Hoffmann, H. Krömer, R. Kuhn, Polymeranalytik I und II, Georg-Thieme-Verlag, Stuttgart 1977).

Die Pfropfpolymerisate A.2 können nach bekannten Verfahren wie Masse-. Suspensions-, Emulsions- oder Masse-Suspensionsverfahren hergestellt werden.

Erfindungsgemäß werden die Vinylpolymerisate mittels Filtration erhalten. Die Filtration wird hierbei vorzugsweise drucklos durchgeführt.

Erfindungsgemäß wird eine Filtration über einen Filter mit einer mittleren Maschenweite von ≤200 μm bevorzugt. Besonders bevorzugt sind Maschenweiten von ≤150 μm. Höchst bevorzugt sind Maschenweiten von ≤100 μm.

Es ist weiterhin bevorzugt, daß die mittlere Maschenweite 50 μm nicht unterschreitet; denn bei zu geringen Maschenweiten besteht die Gefahr zu hoher Scherkräfte. Zudem wird die Filtrationsgeschwindigkeit so verlangsamt, daß der Zeitaufwand zu hoch bzw. der Durchsatz zu stark vermindert wird.

Für die Filter kommen alle bekannten Materialien in Betracht. Hierzu zählen beispielsweise Metalle oder Gewebe aller Art.

Die mittels der beschriebenen Filtration hergestellten erfindungsgemäßen Vinylpolymerisate zeichnen sich durch eine signifikante Verbesserung ihrer mechanischen Eigenschaften aus. Insbesondere sind die Reißdehnung, der Rohton, die Thermostabilität und die Kerbschlagzähigkeit in einem nicht vorhersehbaren Maß verbessert. Zudem weisen sie eine überraschend gleichbleibende Produktqualität auf.

Erfindungsgemäß können die beschriebenen Vinylpolymerisate teilweise durch andere Thermoplaste ersetzt werden. Die anderen Thermoplaste sind vorzugsweise ausgewählt aus mindestens einem Thermoplasten der Gruppe der Polycarbonate, Polyestercarbonate, Polyester, vorzugweise Polyalkylenterephthalate, und übliche (Co)Polymerisate gemäß der oben beschriebenen Komponente A.1, jedoch ohne den erfindungsgemäßen Grobanteil von Teilchen.

Weiterhin können die erfindungsgemäßen Formmassen weitere Zusatzstoffe ausgewählt aus mindestens einem der Gruppe der Flammschutzmittel, Anti-Dripping-Mittel, feinstteilige anorganische Verbindungen und Füll- und

Verstärkungsstoffe enthalten.

Die thermoplastischen Formmassen enthalten vorzugsweise

A. 0,5 bis 60, vorzugsweise 1 bis 40 Gew.-Teile der erfindungsgemäßen Vinylpolymerisate,

B. 40 bis 99, vorzugsweise 50 bis 95 Gew.-Teile Polycarbonate und/oder Polyestercarbonate,

C. 0 bis 50, vorzugsweise 1 bis 30, besonders bevorzugt 2 bis 25 Gew.-Teile Copolymerisate aus Styrol, α-Methylstyrol, kernsubstituierten Styrol oder Mischungen davon und Acrylnitril, Methacrylnitril, (Meth)Acrylsäure-$C_1$-$C_8$-alkylester, Maleinsäureanhydrid, N-substituierten Maleinimiden oder Mischungen davon,

D. 0 bis 45, vorzugsweise 0 bis 30, besonders bevorzugt 0 bis 25 Gew -Teile Polyalkylenterephthalat.

Die Summe aller Komponenten der erfindungsgemäßen Formmassen ergibt 100.

Ein Teil der Komponente A kann auch durch übliche ABS-Polymerisate ersetzt werden.

Geeignete Polycarbonate und/oder Polyestercarbonate sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z.B. DE-OS 3 077 934).

Die Herstellung aromatischer Polycarbonate erfolgt z.B. durch Umsetzung von Diphenolen mit Kohlensäurchalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielseise Monophenolen und gegebenenfalls unter Verwendung von trifunktionellen oder mehr als trifunktionellen Verzweigem, beispielsweise Triphenolen oder Tetraphenolen.

Diphenole zur Herstellung der aromatischen Polycarbonate und/oder aromatischen Polyestercarbonate sind vorzugsweise solche der Formel (I)

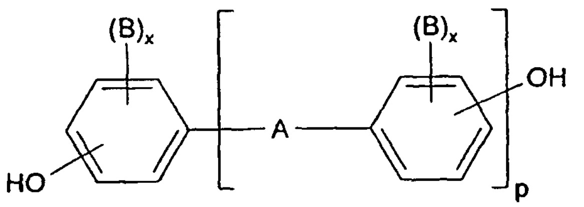

(I),

wobei

A eine Einfachbindung, $C_1$-$C_5$-Alkylen, $C_2$-$C_5$-Alkyliden, $C_5$-$C_6$ -Cycloalkyliden, -O-, -SO-, -CO-, -S-, -$SO_2$-, $C_6$-$C_{12}$-Arylen, an das weitere aromatische gegebenenfalls Heteroatome enthaltende Ringe kondensiert sein können,
oder ein Rest der Formel (II) oder (III)

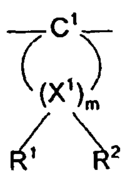

(II)

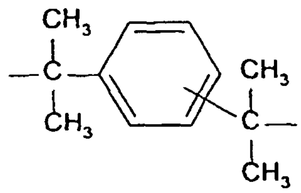

(III)

B jeweils $C_1$-$C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^1$ und $R^2$ für jedes $X^1$ individuell wählbar, unabhängig voneinander Wasserstoff oder $C_1$-$C_6$-Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, daß an mindestens einen Atom $X^1$, $R^1$ und $R^2$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxylphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis-(3-chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte ($\overline{M}_w$, gemessen z.B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate können auch 1 bis 25 Gew.-%, vorzugsweise 2,5 bis 25 Gew.% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-Patent 3 419 634) bzw. nach literaturbekannten Verfahren herstellbar. Die Herstellung Polydiorganosiloxan-haltiger Copolycarbonate wird z.B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere 2,2-Bis-(3,5-dibrom-4-hydroxyphenyl)-propan.

Aromatische Dicarbonsauredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$-$C_{22}$-Alkylgruppen oder durch Halogenatome substituiert sein können, sowie aliphatische $C_2$-$C_{22}$-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten

Die aromatischen Polyestercarbonate können sowohl linear als auch in bekannter Weise verzweigt sein (s. dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten, 2,4,4-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-%, bezogen auf eingesetzte Diphenole, verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml Methylenchlorid-Lösung bei 25°C)

Die thermoplastischen, aromatischen Polycarbonate und Polyestercarbonate können allein oder im beliebigen Gemisch untereinander eingesetzt werden.

Die Polycarbonate können auch teilweise durch Polyester ersetzt werden.

Bevorzugte Polyester sind Polyalkylenterephthalate. Diese sind Reaktionsprodukte von aromatischen Dicarbonsäuren (oder ihren reaktionsfähigen Derivaten, z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen und cycloaliphatischen Diolen mit 2 bis 10 C-Atomen nach bekannten Methoden herstellen (Kunststoff-Handbuch), Band VIII, S. 695 ff, Carl Hanser Verlag, München 1973).

Bevorzugte Polyalkylenterephthalate enthalten 80 bis 100, vorzugsweise 90 bis 100 Mol-%, bezogen auf die Dicarbonsäurekomponente, Terephthalsäurereste und 80 bis 100, vorzugsweise 90 bis 100 Mol-%, bezogen auf die Diolkomponente, Ethylenglykol und/oder Butandiol-1,4-Reste. Neben Terephthalsäureresten sind 0 bis 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsaure, Bemstein-, Adipin-, Sebacin-, Azelain- oder Cyclohexandiessigsäure. Neben Ethylenglykol- und/oder Butandiol-1,4-Resten sind 0 bis 20 Mol-% anderer aliphatischer Diole mit 3 bis 12 C-Atomen oder cycloaliphatischer Diole mit 6 bis 12 C-Atomen enthalten, z.B. Reste von Pentandiol-1,5, Hexandiol-1,6, Cyclohexandimethanol-1,4, 3-Methylpentandiol-1,3 und -1,6, 2-Ethylhexandiol-1,3, 2,2-Diethylpropandiol-1,3, Hexandiol-2,5, 1-4-Di-(β-hydroxyethoxyphenyl)-propan, 2,4-Di-hydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2715932).

Die Polyalkylenterephthalate können durch Einbau relativ kleiner Mengen 3- oder 4-wertiger Alkohole oder 3- oder 4-basiger Carbonsäuren, wie sie in DE-OS 1 900 270 und US-PS 3 692 744 beschrieben sind, verzweigt werden. Beispiele bevorzugter Verzweigungsmittel sind Trimesinsäure, Trimellithsäure, Trimethylolethan und -propan und Pentraerythrit. Es ist ratsam, nicht mehr als 1 Mol-% des Verzweigungsmittels, bezogen auf die Säurekomponente,

zu verwenden.

Besonders bevorzugt sind Polyalkylenterephthalate, die allein aus Terephthalsäure (oder deren reaktionsfähigen Derivaten, z.B. deren Dialkylestern) und Ethandiol und/oder Butandiol-1,4 hergestellt worden sind sowie deren Mischungen.

Bevorzugte Polyalkylenterephthalate sind auch Copolyester, die aus mindestens zwei der obengenannten Diole hergestellt sind; besonders bevorzugte Copolyester sind Poly-(ethylenglykol/butandiol-1,4)-terephthalate. In den Copolyestern können die verschiedenen Diolreste in Form von Blöcken oder statistisch verteilt vorliegen.

Die Polyalkylenterephthalate besitzen im allgemeinen eine Intrinsic-Viskosität von 0,4 bis 1,4 dl/g, vorzugsweise 0,5 bis 1,3 dl/g, insbesondere 0,6 bis 1,2 dl/g, jeweils gemessen in Phenol/o-Dichlorbenzol (1:1 Gew.-Tl.) bei 25°C.

Ferner können die erfindungsgemäßen thermoplastischen Formmassen Flammschutzmittel enthalten. Dabei sind sowohl halogenhaltige als auch halogenfreie Verbindungen geeignet. Die Flammschutzmittel werden im allgemeinen in einer Menge von 0,1 bis 35, vorzugsweise 0,5 bis 30 Gew.-Teilen, bezogen auf die Summe der Komponenten A-D, zugesetzt werden.

Geeignete Halogenverbindungen sind organische Chlor- und/oder Bromverbindungen, die bei der Herstellung und Verarbeitung der erfindungsgemäßen Formmassen stabil sind, so daß keine korrosiven Gase freigesetzt werden und die Wirksamkeit dadurch nicht beeinträchtigt wird.

Halogenhaltige Verbindungen sind beispielsweise

1. Chlorierte und bromierte Diphenyle, wie Octachlordiphenyl, Decachlordiphenyl, Octabromdiphenyl, Decabromdiphenyl.

2. Chlorierte und bromierte Diphenylether, wie Octa- und Decachlordiphenylether und Octa- und Decabromdiphenylether.

3. Chloriertes und bromiertes Phthalsäureanhydrid und seine Derivate, wie Phthalimide und Bisphthalimide, z.B. Tetrachlor- und Tetrabromphthalsäureanhydrid, Tetrachlor- und Tetrabromphthalimid, N,N'-Ethylen-bis-tetrachlor- und N,N'-Ethylen-bis-tetrabromphthalimid, N-Methyltetrachlor- und N-Methyltetrabromphthalimid.

4. Chlorierte und bromierte Bisphenole, wie 2,2-Bis-(3,5-di-chlor-4-hydroxyphenyl)-propan und 2,2-Bis-(3,5-dibrom-4-hydroxyphenyl)-propan.

5. 2,2-Bis-(3,5-di-chlor-4-hydroxyphenyl)-propan-Oligocarbonat und 2,2-Bis-(3,5-di-brom-4-hydroxyphenyl)-propan-Oligocarbonat mit einem mittleren Polykondensationsgrad von 2 bis 20.

Bromverbindungen werden gegenüber den Chlorverbindungen bevorzugt und halogenfreie Verbindungen gegenüber diesen.

Vorzugsweise als Flammschutzmittel geeignet sind alle üblicherweise hierfür verwendetcn Phosphorverbindungen, insbesondere Phosphinoxide und Derivate von Säuren des Phosphors und Salze von Sauren und Säurederivaten des Phosphors Bevorzugt werden Derivate (z.B. Ester) von Säuren des Phosphors und deren Salze, wobei Säuren des Phosphors, Phosphorsäure, Phosphonsäure, Phosphinsäure, phosphorige Säure, auch jeweils in dehydratisierter Form einschließt, Salze bevorzugt Alkali-, Erdalkali- und Ammoniumsalze dieser Säuren sind und auch deren Derivate (beispielsweise teilveresterter Säuren) eingeschlossen sind.

Als Phosphorverbindungen geeignet sind z. B. Metallverbindungen von Monoestern der Phosphorsäure der Formel (IVa) und (IVb),

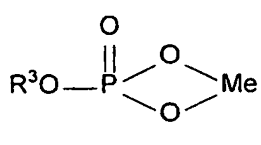

(IVa)

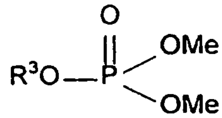

(IVb)

oder Metallverbindungen von Diestern der Phosphorsäure gemäß Formel (V)

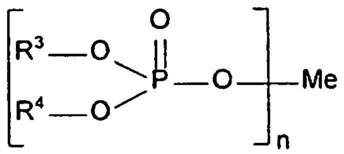

(V)

worin

$R^3$ und $R^4$ unabhängig voneinander, gegebenenfalls halogeniertes $C_1$-$C_{24}$-Alkyl, jeweils gegebenenfalls durch Halogen und/oder $C_1$-$C_{10}$-Alkyl substituiertes $C_5$-$C_6$-Cycloalkyl, $C_6$-$C_{20}$-Aryl oder $C_7$-$C_{12}$-Aralkyl bedeuten, oder im Falle der Formel (V) $R^3$ und $R^4$ gemeinsam eine Alkyl-Kette bilden,

Me für ein Metall, ausgewählt aus der 1. und 3. Hauptgruppe und VIII, IB und IIB der Nebengruppe des Periodensystems steht,

und

n durch die Wertigkeit des Metallions bestimmt wird.

$R^3$ und $R^4$ stehen unabhängig voneinander vorzugsweise für gegebenenfalls halogeniertes (vorzugsweise durch Chlor und/oder Brom) $C_1$-$C_{15}$-, insbesondere $C_1$-$C_{10}$-Alkyl, jeweils gegebenenfalls durch Halogen (vorzugsweise Chlor und/oder Brom) und/oder $C_1$-$C_6$-, insbesondere $C_1$-$C_4$-Alkyl, insbesondere Methyl, Ethyl, n-, iso-Propyl, substituiertes Cyclopentyl, Cyclohexyl, Phenyl, Naphthyl, Phenyl-$C_1$-$C_4$-alkyl (wie Benzyl).
Als Metalle Me sind Metalle aus der 2. und 3. Hauptgruppe und der II. Nebengruppe bevorzugt.
Besonders bevorzugt steht Me für Mg, Ca, Ba, Bor, Al oder Zn.
Zur Herstellung der erfindungsgemäßen Metallverbindungen der Phosphorsäureester sind literaturbekannte Verfahren wie beispielsweise das Umesterungsverfahren ausgehend von Triestern der Phosphorsäure oder das Säurehalogenid-Verfahren, ausgehend von Phosphorylchlorid geeignet (EP-A-0 801 116; J. Org. Chem. 1978, Vol. 43, Nr. 1, S. 24-31).
Weiterhin sind als Flammschutzmittel Phosphorverbindungen der Formel (VI) geeignet,

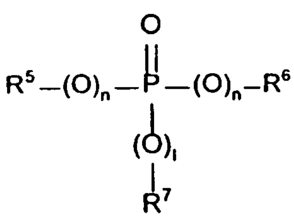

(VI),

in der

$R^5$, $R^6$ und $R^7$ unabhängig voneinander ein gegebenenfalls halogeniertes $C_1$-$C_8$-Alkyl oder ein gegebenenfalls halogeniertes und/oder alkyliertes $C_5$- oder $C_6$-Cycloalkyl oder ein gegebenenfalls halogeniertes und/oder alkyliertes und/oder aralkyliertes $C_6$-$C_{30}$-Aryl, und

"n" und "l" unabhängig voneinander 0 oder 1 sind.

Diese Phosphorverbindungen sind generell bekannt (siehe beispielsweise Ullmann, Enzyklopädie der technischen Chemie, Band 18, Seiten 301 ff, 1979). Die aralkylierten Phosphorverbindungen sind beispielsweise in der DE-OS 38 24 356 beschrieben.
Gegebenenfalls halogenierte $C_1$-$C_8$-Alkylreste gemäß (VI) können einfach oder mehrfach halogeniert, linear oder verzweigt sein. Beispiele für Alkylreste sind Chlorethyl, 2-Chlorpropyl, 2,3-Dibrompropyl, Butyl, Methyl oder Octyl
Gegebenenfalls halogenierte und/oder alkylierte $C_5$-oder $C_6$-Cycloalkyle gemäß (VI) sind gegebenenfalls einfach bis mehrfach halogenierte und/oder alkylierte $C_5$- oder $C_6$-Cycloalkyle, also z.B. Cyclopentyl, Cyclohexyl, 3,3,5-Trimethylcyclohexyl und vollchloriertes Cyclohexyl.

Gegebenenfalls halogenierte und/oder alkylierte und/oder aralkylierte $C_6$-$C_{30}$-Arylreste gemäß (VI) sind gegebenenfalls ein oder mehrkernig, einfach oder mehrfach halogeniert und/oder alkyliert und/oder aralkyliert, z.B. Chlorphenyl, Bromphenyl, Pentachlorphenyl, Pentabromphenyl, Phenyl, Kresyl, Isopropylphenyl, benzylsubstituiertes Phenyl und Naphthyl.

Bevorzugt stehen $R^5$, $R^6$ und $R^7$ unabhängig voneinander für Methyl, Ethyl, Butyl, Octyl, Phenyl, Kresyl, Cumyl oder Naphthyl. Besonders bevorzugt stehen $R^5$, $R^6$ und $R^7$ unabhängig voneinander für Methyl, Ethyl, Butyl, gegebenenfalls durch Methyl und/oder Ethyl substituiertes Phenyl.

Erfindungsgemäß einsetzbare Phosphorverbindungen gemäß Formel (VI) sind z.B. Tributylphosphat, Tris-(2-chlorethyl)phosphat, Tris-(2,3-dibrompropyl)phosphat, Triphenylphosphat, Trikresylphosphat, Diphenylkresylphosphat, Diphenyloctylphosphat, Diphenyl-2-ethylkresylphosphat, Tri-(isopropylphenyl)phosphat, Tris-(p-benzylphenyl)phosphat, Triphenylphosphinoxid, Methylphosphonsäuredimethylester, Methanphosphonsäuredipenthylester und Phenylphosphonsäurediethylester.

Geeignete Flammschutzmittel sind auch dimere und oligomere Phosphate, wie beispielsweise in der EP-A-0 363 608 beschrieben.

Die erfindungsgemäßen Formmassen können als Flammschutzmittel Phosphorverbindungen gemäß Formel (VII) enthalten,

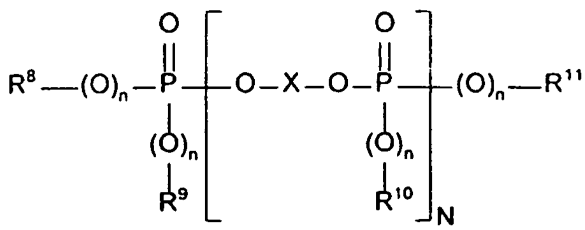

(VII)

In der Formel stehen $R^8$, $R^9$, $R^{10}$ und $R^{11}$, unabhängig voneinander für jeweils gegebenenfalls halogeniertes $C_1$-$C_8$-Alkyl, $C_5$-$C_6$-Cycloalkyl, $C_6$-$C_{20}$-Aryl oder $C_7$-$C_{12}$-Aralkyl.

Bevorzugt stehen $R^8$, $R^9$, $R^{10}$ und $R^{11}$ unabhängig voneinander für $C_1$-$C_4$-Alkyl, Phenyl, Naphthyl oder Phenyl-$C_1$-$C_4$-alkyl. Die aromatischen Gruppen $R^8$, $R^9$, $R^{10}$ und $R^{11}$ können ihrerseits mit Halogen- und/oder Alkylgruppen, vorzugsweise Chlor, Brom und/oder $C_1$-$C_4$-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (VII) bedeutet einen ein- oder mehrkernigen aromatischen Rest mit 6 bis 30 C-Atomen. Dieser leitet sich vorzugsweise von Diphenolen der Formel (I) ab. Besonders bevorzugt sind Diphenylphenol, Bisphenol A, Resorcin oder Hydrochinon oder deren chlorierte oder bromierte Derivaten.

n in der Formel (VII) kann, unabhängig voneinander, 0 oder 1 sein, vorzugsweise ist n gleich 1.

N steht für Werte von 0 bis 30, vorzugsweise für einen durchschnittlichen Wert von 0,3 bis 20 , besonders bevorzugt 0,5 bis 10, insbesondere 0,5 bis 6.

Einsetzbar sind auch Mischungen aus 10 bis 90 Gew.-%, vorzugsweise 12 bis 40 Gew.-%, wenigstens einer Monophosphorverbindung der Formel (VI) und wenigstens einer oligomeren Phosphorverbindung beziehungsweise eines Gemisches von oligomeren Phosphorverbindungen wie in EP-A-363 608 beschrieben sowie Phosphorverbindungen gemäß Formel (VII) in Mengen von 10 bis 90 Gew.-%, vorzugsweise 60 bis 88 Gew.-%, bezogen auf die Gesamtmenge an Phosphorverbindungen, eingesetzt.

Monophosphorverbindungen der Formel (VI) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid oder Trikresylphosphinoxid.

Die Mischungen aus monomeren und oligomeren Phosphorverbindungen der Formel (VII) weisen durchschnittliche N-Werte von 0,3 bis 20, bevorzugt 0,5 bis 10, insbesondere von 0,5 bis 6 auf.

Die genannten Phosphorverbindungen sind bekannt (vgl. z.B. EP-A-363 608, EP-A-640 655) oder lassen sich nach bekannten Methoden in analoger Weise herstellen (z.B. Ullmanns Encyklopädie der technischen Chemie,

Bd. 18, S. 301 ff. 1979; Houben-Weyl, Methoden der organischen Chemie, Bd. 12/l, S. 43; Beilstein Bd. 6, S. 177).

Zu den erfindungsgemäß einsetzbaren Phosphorverbindungen gehören auch lineare Phosphazene gemäß Formel (VIII) und cyclische Phosphazene gemäß Formel (IX)

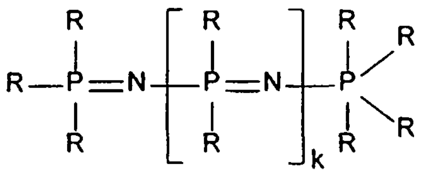

(VIII),

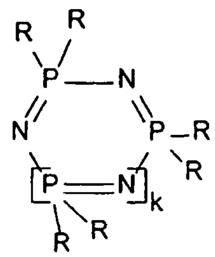

(IX),

worin

R jeweils gleich oder verschieden ist und für Amino, jeweils gegebenenfalls halogeniertes, vorzugsweise mit Fluor halogeniertes $C_1$- bis $C_6$-Alkyl oder $C_1$-$C_8$-Alkoxy, jeweils gegebenenfalls durch Alkyl, vorzugsweise $C_1$-$C_4$-Alkyl, und/oder Halogen, vorzugsweise Chlor, Brom, substituiertes $C_5$- bis $C_6$-Cycloalkyl, $C_6$- bis $C_{20}$-Aryl, vorzugsweise Phenyl oder Naphthyl, $C_6$-bis $C_{20}$-Aryloxy, vorzugsweise Phenoxy, Naphthyloxy, oder $C_7$-$C_{12}$-Aralkyl, vorzugsweise Phenyl-$C_1$-$C_4$-alkyl, steht,

k für 0 oder eine Zahl von 1 bis 15, vorzugsweise für eine Zahl von 1 bis 10 steht.

Beispielhaft seien genannt:

Propoxyphosphazen, Phenoxyphosphazen, Methylphenoxyphosphazen, Aminophosphazen und Fluoralkylphosphazene.

Bevorzugt ist Phenoxyphosphazen.

Die Phosphazene können allein oder als Mischung eingesetzt werden. Der Rest R kann immer gleich sein oder 2 oder mehr Reste in den Formeln (VIII) und (IX) können verschieden sein.

Die Phosphazene und deren Herstellung sind beispielsweise in EP-A-728 811, DE-A-1 961 668 und WO 97/40 092 beschrieben.

Weiterhin können die erfindungsgemäßen Formmassen vorzugsweise 0,05 bis 5, besonders bevorzugt 0,1 bis 1, insbesondere 0,1 bis 0,5 Gew.-Teile, bezogen auf die Gesamtmasse, fluorierte Polyolefine enthalten. Geeignete fluorierte Polyolefine sind hochmolekular und besitzen Glasübergangstemperaturen von über -30°C, in der Regel von über 100°C. Ihre Fluorgehalte betragen vorzugsweise 65 bis 76, insbesondere 70 bis 76 Gew.-%. Ihre mittlere Teilchendurchmesser $d_{50}$ betragen im allgemeinen 0,05 bis 1.000, vorzugsweise 0,08 bis 20 µm. Im allgemeinen haben die fluorierten Polyolefine E eine Dichte von 1,2 bis 2,3 g/$cm^3$.

Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate.

Die fluorierten Polyolefine sind bekannt (vgl. "Vinyl and Related Polymers" von Schildknecht, John Wiley & Sons, Inc., New York, 1962, Seite 484 bis 494; "Fluorpolymers" von Wall, Wiley-Interscience, John Wiley & Sons, Inc., New York, Band 13, 1970, Seite 623 bis 654; "Modem Plastics Encyclopedia", 1970 bis 1971, Band 47, Nr. 10A, Oktober 1970, Mc Graw-Hill, Inc., New York, Seite 134 und 774; "Modern Plastics Encyclopedia", 1975 bis 1976, Oktober 1975, Band 52, Nr. 10A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxydisulfat bei Drücken von 7 bis 71 kg/$cm^2$ und bei Temperaturen von 0 bis 200°C, vorzugsweise

bei Temperaturen von 20 bis 100°C. (Nähere Einzelheiten siehe z.B. US-Patent 2 393 967.) Je nach Einsatzforrn kann die Dichte dieser Materialien zwischen 1,2 und 2,3 g/cm$^3$, die mittlere Teilchengröße zwischen 0,05 und 1.000 µm liegen.

Bevorzugte fluorierte Polyolefine sind Tetrafluorethylenpolymerisate. Sie haben mittlere Teilchendurchmesser von 0,05 bis 20 µm, vorzugsweise 0,08 bis 10 µm, und eine Dichte von 1,2 bis 1,9 g/cm$^3$ und werden vorzugsweise in Form einer koagulierten Mischung von Emulsionen der Tetrafluorethylenpolymerisate E mit Emulsionen der Pfropfpolymerisate C eingesetzt.

Geeignete, in Pulverform einsetzbare fluorierte Polyolefine sind Tetrafluorethylenpolymerisate mit mittleren Teilchendurchmessern von 100 bis 1.000 µm und Dichten von 2,0 g/cm$^3$ bis 2,3 g/cm$^3$.

Die erfindungsgemäßen thermoplastischen Formmassen können ferner feinstteilige anorganische Verbindungen enthalten. Vorzugsweise enthalten die erfindungsgemäßen Formmassen 0,1 bis 50 Gew.-Teile, vorzugsweise 0,1 bis 10 Gew.-Teile, bezogen auf die Gesamtmenge. Diese können vorzugsweise aus Verbindungen eines oder mehrerer Metalle der 1. bis 5. Hauptgruppe oder 1. bis 8. Nebengruppe des Periodensystems, bevorzugt 2. bis 5. Hauptgruppe oder 4. bis 8. Nebengruppe, besonders bevorzugt 3. bis 5. Hauptgruppe oder 4. bis 8. Nebengruppe mit mindestens einem Element ausgewählt aus der Gruppe bestehend aus Sauerstoff, Schwefel, Bor, Phosphor, Kohlenstoff, Stickstoff, Wasserstoff und Silicium bestehen.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugte feinstteilige anorganischen Verbindungen sind beispielsweise TiN, $TiO_2$, $SnO_2$, WC, ZnO, $Al_2O_3$, AlO(OH), $ZrO_2$, $Sb_2O_3$, $SiO_2$, Eisenoxide, $Na_2SO_4$, Si, $BaSO_4$, Vanadianoxide, Zinkborat, Silicate wie Al-Silikate, Mg-Silikate, ein, zwei, dreidimensionale Silikate, Mischungen und dotierte Verbindungen sind ebenfalls verwendbar. Desweiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Die durchschnittlichen Teilchendurchmesser sind kleiner gleich 200 nm, bevorzugt kleiner gleich 150 nm, insbesondere 1 bis 100 nm

Teilchengröße und Teilchendurchmesser bedeutet immer den mittleren Teilchendurchmesser $d_{50}$, ermittelt durch Ultrazentrifugenmessungen nach W. Scholtan et al. Kolloid-Z. und Z. Polymere 250 (1972), S. 782 bis 796.

Die anorganischen Verbindungen können als Pulver, Pasten, Sole, Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Kunststoffe eingearbeitet werden, beispielsweise durch direktes Kneten oder Extrudieren der Bestandteile der Formmasse und den feinstteiligen anorganischen Pulvern. Bevorzugte Verfahren stellen die Herstellung eines Masterbatch, z.B. in Flammschutzadditiven, anderen Additiven, Monomeren, Lösungsmitteln, die Cofällung von Dispersionen der oben beschriebenen Komponenten der erfindungsgemäßen thermoplastischen Formmassen mit Dispersionen, Suspensionen, Pasten oder Solen der feinstteiligen anorganischen Materialien dar.

Die erfindungsgemäßen Formmassen können ferner übliche Additive, wie Gleit- und Entformungsmittel, Nukleiermittel, Antistatika, Stabilisatoren, Füll- und Verstärkungsstoffe sowie Farbstoffe und Pigmente enthalten.

Die gefüllten bzw. verstärkten Formmassen können bis zu 60, vorzugsweise 10 bis 40 Gew.-%, bezogen auf die gefüllte bzw verstärkte Formmasse, Füll- und/oder Verstärkungsstoffe enthalten. Bevorzugte Verstärkungsstoffe sind Glasfasern. Bevorzugte Fullstoffe, die auch verstärkend wirken können, sind Glaskugeln, Glimmer, Silikate, Quarz, Talkum, Titandioxid, Wollastonit.

Die erfindungsgemäßen Formmassen können hergestellt werden, indem man die Bestandteile in bekannter Weise vermischt und bei erhöhten Temperaturen, vorzugsweise bei 200 bis 350°C, in üblichen Vorrichtungen, wie Innenknetern, Extrudern oder Doppelwellenschnecken, schmelzcompoundiert oder schmelzextrudiert. Die Bestandteile können nacheinander oder gleichzeitig gemischt werden. In speziellen Fällen kann es günstig sein, aus den niedermolekularen Additiven und den Magnesium-Aluminium-Silikaten Vormischungen herzustellen.

Die erfindungsgemäßen thermoplastischen Formmassen eignen sich aufgrund ihrer sehr guten mechanischen Eigenschaften zur Herstellung von Formkörpern jeglicher Art, insbesondere solchen mit erhöhten Anforderungen an Bruchbeständigkeit.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgerate wie Saftpressen, Kaffeemaschinen, Mixer, für Büromaschinen wie Monitore, Drucker, Kopierer, oder Abdeckplatten für den Bausektor und Teile für den Kfz-Sektor. Sie sind außerdem auf dem Gebiet der Elektrotechnik einsetzbar, weil sie sehr gute elektrische Eigenschaften haben.

Weiterhin können die erfindungsgemäßen Formmassen beispielsweise zur Herstellung von folgenden Formkörpern bzw. Formteilen verwendet werden:

1. Innenausbauteile für Schienenfahrzeuge (FR)
2. Radkappen
3. Gehäuse von Kleintransformatoren enthaltenden Elektrogeräten
4. Gehäuse für Geräte zur Informationsverbreitung und -Übermittlung
5. Gehäuse und Verkleidung für medizinische Zwecke
6. Massagegeräte und Gehäuse dafür
7. Spielfahrzeuge für Kinder
8 Flächige Wandelemente
9. Gehäuse für Sicherheitseinrichtungen
10. Heckspoiler
11. Wärmeisolierte Transportbehältnisse
12. Vorrichtung zur Haltung oder Versorgung von Kleintieren
13. Formteile für Sanitär- und Badeausrüstungen
14. Abdeckgitter für Lüfteröffnungen
15. Formteile für Garten- und Gerätehäuser
16. Gehäuse für Gartengeräte

Eine weitere Form der Verarbeitung ist die Herstellung von Formkörpern durch Tiefziehen aus vorher hergestellten Platten oder Folien.

Im folgenden wird die Erfindung unter Bezugnahme auf die Beispiele näher bcschrieben:

## Beispiele

## Komponente A

### A1 (Vergleich)

Pfropfpolymerisat von 40 Gew.-Teilen eines Copolymerisats aus Styrol und Acrylnitril im Verhältnis von 73: 27 auf 60 Gew.-Teile teilchenförmigen vernetzten Polybutadienkautschuk (mittlerer Teilchendurchmesser $d_{50}$=0,3 μm), hergestellt durch Emulsionspolymerisation.

Der Grobanteil des Teilchendurchmessers 200 bis 500 μm beträgt 3800 ppm (Bestimmung durch Naßsiebung mit anschließender gravimetrischer Mengenbestimmung des Grobanteils).

### A2 (Vergleich)

Pfropfpolymerisat von 40 Gew.-Teilen eines Copolymerisats aus Styrol und Acrylnitril im Verhältnis von 73: 27 auf 60 Gew.-Teile teilchenförmigen vernetzten Polybutadienkautschuk (mittlerer Teilchendurchmesser $d_{50}$=0,35 μm), hergestellt durch Emulsionspolymerisation.

Der Grobanteil des Teilchendurchmessers 200 bis 500 μm beträgt 4100 ppm (Bestimmung durch Naßsiebung mit anschließender gravimetrischer Mengenbestimmung des Grobanteils).

### A3

Erfindungsgemäßes Pfropfpolymerisat von 40 Gew.-Teilen eines Copolymerisats aus Styrol und Acrylnitril im Verhältnis von 73:27 auf 60 Gew.-Teile teilchenformigen vernetzten Polybutadienkautschuk (mittlerer Teilchendurchmesser $d_{50}$=0,3 μm), hergestellt durch Emulsionspolymerisation.

Der Grobanteil des Teilchendurchmessers 200 bis 500 μm des erfindungsgemäßes Pfropfpolymerisats ist kleiner 50 ppm (Bestimmung durch Naßsiebung mit anschließender gravimetrischer Mengenbestimmung des Grobanteils).

### A4

Erfindungsgemäßes Pfropfpolymerisat von 40 Gew.-Teilen eines Copolymerisats aus Styrol und Acrylnitril im Verhältnis von 73:27 auf 60 Gew.-Teile teilchenförmigen vernetzten Polybutadienkautschuk (mittlerer Teilchendurchmesser $d_{50}$=0,35 μm), hergestellt durch Emulsionspolymerisation.

Der Grobanteil des Teilchendurchmessers 200 bis 500 μm des erfindungsgemäßes Pfropfpolymerisats ist kleiner 50 ppm (Bestimmung durch Naßsiebung mit anschließender gravimetrischer Mengenbestimmung des Grobanteils).

**Komponente B**

Lineares Polycarbonat auf der Basis Bisphenol A mit einer relativen Lösungsviskosität von 1,252 gemessen in $CH_2Cl_2$ als Lösungsmittel bei 25°C und in einer Konzentration von 0,5 g/100 ml.

**Komponente C**

Styrol/Acrylnitril-Copolymerisat mit einem Styrol/Acrylnitril-Verhältnis von 72:28 und einer Grenzviskosität von 0.55 dl/g (Messung in Dimethylformamid bei 20°C).

**Herstellung und Prüfung der erfindungsgemäßen Formmassen**

Das Mischen der Komponenten A-C erfolgt auf einem 3-l-Innenkneter. Die Formkörper werden auf einer Spritzgießmaschine Typ Arburg 270 E bei 260°C hergestellt.

Die Bestimmung der Kerbschlagzähigkeit erfolgt nach Methode ISO 1801 A an Stäben der Abmessung 80x 10x4 mm bei Raumtemperatur.

Die Reißdehnung DR wird im Rahmen der Bestimmung des Zug-E-Moduls nach Methode ISO 527 an F3 Schulterstäben bestimmt.

Der Yellowness Index wird nach ASTM D 1925 bestimmt.

Bei der Thermostabilität werden Musterplättchen (60x40x2 mm) bei einer Werkzeugtemperatur von 80°C und einer Massetemperatur von 260 bis 300°C gespritzt. Die Massetemperatur wird in 10°C Schritten durchlaufen; die Verweilzeit der Masse im Zylinder beträgt 6 min.

Es erfolgt eine visuelle Beurteilung der Oberfläche nach folgenden Kriterien:

| Symbol | Beurteilung |
|---|---|
| 0 | nicht geprüft |
| 1 | i.o., glatte Oberfläche, keine Aufrisse |
| 2 | Spuren von Zersetzung, glatte Oberfläche, kleine, noch erkennbare Aufrisse |
| 3 | Minimale Zersetzung, glatte Oberfläche, bis 5 blasige Aufrisse |
| 4 | Leichte Zersetzung, glatte Oberfläche, 5 bis 10 blasige Aufrisse |
| 5 | Mittlere Zersetzung, augerissene blasige Oberfläche, etwa zur Hälfte noch glatt |
| 6 | Starke Zersetzung, aufgerissene Oberfläche, noch glatte Stellen erkennbar |
| 7 | Sehr starke Zersetzung, Schaum-Charakter |
| 8 | Schaumbildung, spritzt aus Düse, nicht abspritzbar |

Tabelle 1:

| Zusammensetzung und Eigenschaften der Polycarbonat-ABS-Formmassen | | | | |
|---|---|---|---|---|
| **Beispiel** | **1 (Vergleich)** | **2** | **3 (Vergleich)** | **4** |
| **Komponenten** Gewichtsanteile | | | | |
| A1 | 24,0 | - | - | - |
| A2 | - | - | 24,0 | - |
| A3 | - | 24,0 | - | - |
| A4 | - | - | - | 24,0 |
| B | 43,0 | 43,0 | 43,0 | 43,0 |
| C | 33,0 | 33,0 | 33,0 | 33,0 |
| | | | | |
| **Eigenschaften** | | | | |
| $a_k$ (ISO 1801 A) kJ/$m^2$ | 81,1 | 90,0 | 72,1 | 92,8 |

Tabelle 1: (fortgesetzt)

| Zusammensetzung und Eigenschaften der Polycarbonat-ABS-Formmassen | | | | |
|---|---|---|---|---|
| **Beispiel** | **1 (Vergleich)** | **2** | **3 (Vergleich)** | **4** |
| **Eigenschaften** | | | | |
| DR (ISO 527) % | 35,5 | 80,2 | 15,8 | 79,5 |
| YI | | | 39,40 | 38,84 |
| Thermostabilität 260°C | | | 2 | 1 |
| Thermostabilität 270°C | | | 2 | 2 |
| Thermostabilität 280°C | | | 3 | 2 |
| Thermostabilität 290°C | | | 4 | 4 |
| Thermostabilität 300°C | | | 6 | 5 |

Tabelle 2:

| Zusammensetzungen und Eigenschaften der ABS-Formmassen | | | | |
|---|---|---|---|---|
| **Beispiel** | **1** | **2 (Vergleich)** | **3** | **4 (Vergleich)** |
| **Komponenten** Gewichtsanteile | | | | |
| A1 | - | 40 | - | - |
| A2 | - | - | - | 40 |
| A3 | 40 | - | - | - |
| A4 | - | - | 40 | - |
| C | 60 | 60 | 60 | 60 |
| | | | | |
| **Eigenschaften** | | | | |
| $a_k$ (ISO 1801 A) kJ/m$^2$ | 19,0 | 14,6 | 21,1 | 19,5 |
| $a_k$ (ISO 1801 A) kJ/m | 110 | 79 | 155 | 84 |
| DR (ISO 527) % | 17,4 | 8,6 | 9,6 | 6,7 |
| YI | 37,3 | 38,4 | 35,6 | 38,0 |

**Patentansprüche**

1. Kautschukhaltige Vinylpolymerisate von einem oder mehreren ethylenisch ungesättigten Monomeren ausgewählt aus mindestens einem aus der Gruppe der einfach oder mehrfach ungesättigten Olefine, Vinylacetat, Styrol, α-Methylstyrol, kernsubstituierte Styrole, Vinylcyanide, Maleinsäureanhydrid, N-substituierte-Maleinimide, Chloropren, $C_1$-$C_8$-Alkylacrylate und -Methacrylate, die weniger als 100 ppm Grobanteile mit einem mittleren Teilchendurchmesser von 200 bis 500 μm enthalten.

2. Vinylpolymerisate nach Anspruch 1, **dadurch gekennzeichnet, dass** sie ≤50 ppm Grobanteile mit einem mittleren Teilchendurchmesser von 200 bis 500 μm enthalten.

3. Vinylpolymerisate nach einem der Ansprüche 1 oder 2, **dadurch gekennzeichnet, dass** sie ≤1000 ppm Grobanteile mit einem mittleren Teilchendurchmesser von 100 bis 200 μm enthalten.

**4.** Vinylpolymerisate nach einem der Ansprüche 1 bis 3, **dadurch gekennzeichnet, dass** sie ≤500 ppm Grobanteile mit einem mittleren Teilchendurchmesser von 100 bis 200 μm enthalten.

**5.** Vinylpolymerisate nach einem der Anspruche 1 bis 4, **dadurch gekennzeichnet, dass** sie ≤10.000 ppm Grobanteile mit einem mittleren Teilchendurchmesser von 50 bis 100 μm enthalten.

**6.** Vinylpolymerisate nach einem der Ansprüche 1 bis 5, **dadurch gekennzeichnet, dass** sie ≤5000 ppm Grobanteile mit einem mittleren Teilchendurchmesser von 50 bis 100 μm enthalten.

**7.** Thermoplastische Formmassen, **dadurch gekennzeichnet, dass** sie Vinylpolymerisate nach einem der Ansprüche 1 bis 6 enthalten.

**8.** Thermoplastische Formmassen nach Anspruch 7, **dadurch gekennzeichnet, dass** sie Pfropfpolymerisate harzbildender Vinylpolymere aus einem Kautschuk enthalten.

**9.** Thermoplastische Formmassen nach einem der Ansprüche 7 oder 8, **dadurch gekennzeichnet, dass** sie thermoplastische Polycarbonate und/oder Polyestercarbonate enthalten.

**10.** Thermoplastische Formmassen nach einem der Ansprüche 7 bis 9, **dadurch gekennzeichnet, dass** sie Polyester enthalten.

**11.** Thermoplastische Formmassen nach einem der Ansprüche 7 bis 10, **dadurch gekennzeichnet, dass** sie Flammschutzmittel enthalten.

**12.** Thermoplastischen Formmassen nach einem der Ansprüche 7 bis 11, **dadurch gekennzeichnet, dass** sie anorganische Verbindungen enthalten.

**13.** Thermoplastischen Formmassen nach einem der Ansprüche 7 bis 12, **dadurch gekennzeichnet, dass** sie Polyolefine enthalten.

**14.** Verwendung der Vinylpolymerisate nach einem der Ansprüche 1 bis 6 zur Herstellung von Formmassen.

**15.** Verwendung der Formmassen nach einem der Ansprüche 7 bis 13 zur Herstellung von Formkörpern.

**16.** Formkörper erhältlich aus Formmassen nach einem der Ansprüche 7 bis 13.

## Claims

**1.** Rubber-containing vinyl polymers of one or more ethylenically unsaturated monomers selected from at least one of the group of mono- or polyunsaturated olefins, vinyl acetate, styrene, α-methylstyrene, ring-substituted stryenes, vinyl cyanides, maleic anhydride, N-substituted maleimides, chloroprene, $C_1$-$C_8$-alkyl acrylates and methacrylates containing less than 100 ppm of coarse fractions having a mean particle diameter in the range from 200 to 500 μm.

**2.** Vinyl polymers according to Claim 1, **characterized in that** they contain ≤50 ppm of coarse fractions having a mean particle diameter in the range from 200 to 500 μm.

**3.** Vinyl polymers according to Claim 1 or Claim 2, **characterized in that** they contain ≤1000 ppm of coarse fractions having a mean particle diameter in the range from 100 to 200 μm.

**4.** Vinyl polymers according to any one of Claims 1 to 3, **characterized in that** they contain ≤500 ppm of coarse fractions having a mean particle diameter in the range from 100 to 200 μm.

**5.** Vinyl polymers according to any one of Claims 1 to 4, **characterized in that** they contain ≤10 000 ppm of coarse fractions having a mean particle diameter in the range from 50 to 100 μm.

**6.** Vinyl polymers according to any one of Claims 1 to 5, **characterized in that** they contain ≤5000 ppm of coarse fractions having a mean particle diameter in the range from 50 to 100 μm.

**7.** Thermoplastic moulding compositions, **characterized in that** they contain vinyl polymers according to any one of Claims 1 to 6.

**8.** Thermoplastic moulding compositions according to Claim 7, **characterized in that** they contain graft polymers of resin-forming vinyl polymers on a rubber.

**9.** Thermoplastic moulding compositions according to Claim 7 or Claim 8, **characterized in that** they contain thermoplastic polycarbonates and/or polyester carbonates.

**10.** Thermoplastic moulding compositions according to any one of Claims 7 to 9, **characterized in that** they contain polyester.

**11.** Thermoplastic moulding compositions according to any one of Claims 7 to 10, **characterized in that** they contain flameproofing agents.

**12.** Thermoplastic moulding compositions according to any one of Claims 7 to 11, **characterized in that** they contain inorganic compounds.

**13.** Thermoplastic moulding compositions according to any one of Claims 7 to 12, **characterized in that** they contain polyolefins.

**14.** Use of the vinyl polymers according to any one of Claims 1 to 6 for producing moulding compositions.

**15.** Use of the moulding compositions according to any one of Claims 7 to 13 for producing moulded articles.

**16.** Moulded articles obtainable from moulding compositions according to any one of Claims 7 to 13.

## Revendications

**1.** Polymères de vinyle contenant du caoutchouc se composant d'un ou de plusieurs monomères présentant une insaturation éthylénique, dont au moins un est sélectionné parmi le groupe constitué par les oléfines mono- ou polyinsaturées, l'acétate de vinyle, le styrène, l'$\alpha$-méthylstyrène, les styrènes à cycle substitué, les cyanures de vinyle, l'anhydride maléique, les maléinimides N-substitués, le chloroprène, les alkylacrylates et les alkylméthacrylates en $C_1$-$C_8$, qui contiennent moins de 100 ppm de particules grossières avec un diamètre de particule moyen compris entre 200 et 500 $\mu$m.

**2.** Polymères de vinyle selon la revendication 1, **caractérisés en ce qu'**ils contiennent $\leq$ 50 ppm de particules grossières avec un diamètre de particule moyen compris entre 200 et 500 $\mu$m.

**3.** Polymères de vinyle selon une des revendications 1 ou 2, **caractérisés en ce qu'**ils contiennent $\leq$ 1 000 ppm de particules grossières avec un diamètre de particule moyen compris entre 100 et 200 $\mu$m.

**4.** Polymères de vinyle selon une des revendications 1 à 3, **caractérisés en ce qu'**ils contiennent $\leq$ 500 ppm de particules grossières avec un diamètre de particule moyen compris entre 100 et 200 $\mu$m.

**5.** Polymères de vinyle selon une des revendications 1 à 4, **caractérisés en ce qu'**ils contiennent $\leq$ 10 000 ppm de particules grossières avec un diamètre de particule moyen compris entre 50 et 100 $\mu$m.

**6.** Polymères de vinyle selon une des revendications 1 à 5, **caractérisés en ce qu'**ils contiennent $\leq$ 5 000 ppm de particules grossières avec un diamètre de particule moyen compris entre 50 et 100 $\mu$m.

**7.** Matières à mouler thermoplastiques, **caractérisées en ce qu'**elles contiennent des polymères de vinyle selon une des revendications 1 à 6.

**8.** Matières à mouler thermoplastiques selon la revendication 7, **caractérisées en ce qu'**elles contiennent des polymères de greffage de monomères de vinyle formateurs de résine sur un caoutchouc.

9. Matières à mouler thermoplastiques selon une des revendications 7 ou 8, **caractérisées en ce qu'**elles contiennent des polycarbonates et/ou des polyestercarbonates thermoplastiques.

10. Matières à mouler thermoplastiques selon une des revendications 7 à 9, **caractérisées en ce qu'**elles contiennent du polyester.

11. Matières à mouler thermoplastiques selon une des revendications 7 à 10, **caractérisées en ce qu'**elles contiennent des agents pare-flammes.

12. Matières à mouler thermoplastiques selon une des revendications 7 à 11, **caractérisées en ce qu'**elles contiennent des composés inorganiques.

13. Matières à mouler thermoplastiques selon une des revendications 7 à 12, **caractérisées en ce qu'**elles contiennent des polyoléfines.

14. Utilisation des polymères de vinyle selon une des revendications 1 à 6 pour produire des matières à mouler.

15. Utilisation des matières à mouler selon une des revendications 7 à 13 pour produire des pièces moulées.

16. Pièces moulées pouvant être obtenues à partir des matières à mouler selon une des revendications 7 à 13.